# EUROPÄISCHE PATENTANMELDUNG

(11) **EP 3 974 667 A1**
(43) Veröffentlichungstag der Anmeldung: **30.03.2022**
(21) Anmeldenummer: 21191580.6
(22) Anmeldetag: 17.08.2021
(51) Int. Cl.: F16B 35/00, F16B 37/12, F16B 13/02, F16B 5/02

(54) **STOCKSCHRAUBE SOWIE BEFESTIGUNGSSYSTEM MIT DIESER STOCKSCHRAUBE**

(30) Priorität: 23.09.2020 DE 102020124787; 22.07.2021 DE 102021118936
(71) Anmelder: fischerwerke GmbH & Co. KG, 72178 Waldachtal (DE)
(72) Erfinder: Linsbauer, Wolfgang, 72280 Dornstetten (DE); Seibold, Günter, 72178 Waldachtal Salzstetten (DE)
(74) Vertreter: Suchy, Ulrich Johannes

(57) **Zusammenfassung**

Die Erfindung betrifft eine Stockschraube (2), die sich entlang einer Längsachse (L) von einer Schraubenspitze (8) an einem vorderen Ende (9) zu einem hinteren Ende (6) erstreckt. Die Stockschraube (2) weist einen vorderen Teil (10) und einen hinteren Teil (11) als zwei separate Einzelteile auf, die durch eine Adapterhülse (12), die den Schraubenkopf (14) umgreift, verbunden sind.

## Beschreibung

Die Erfindung betrifft eine Stockschraube mit den Merkmalen des Oberbegriffs des Anspruchs 1 sowie ein Befestigungssystem mit dieser Stockschraube gemäß Anspruch 10.

Stockschrauben sind allgemein als Befestigungsschrauben bekannt, die an einem vorderen Teil einen ersten Gewindeabschnitt zum Einschrauben in einen Verankerungsgrund und an einem hinteren Teil ein insbesondere metrisches Maschinengewinde zum Aufschrauben einer Mutter aufweisen. Die Ausgestaltung des ersten Gewindeabschnitts ist abhängig vom Verankerungsgrund, in den dieser Gewindeabschnitt eingeschraubt werden soll. Ist der Verankerungsgrund aus Holz, so kann der erste Gewindeabschnitt so ausgestaltet sein, wie dies von Holz- oder Spanplattenschrauben bekannt ist. Ist der Verankerungsgrund aus Beton, so kann das Gewinde einer Betonschraube vorgesehen werden, so dass der erste Gewindeabschnitt direkt in ein Bohrloch im Beton eingeschraubt werden kann. Zur Verankerung in Metall kann dagegen der erste Gewindeabschnitt so ausgebildet sein, wie es von selbstbohrenden oder selbstfurchenden Schrauben zur Verankerung in Stahlblechen bekannt ist. Soll dagegen die Verankerung im Bohrloch indirekt mit einem Spreizdübel erfolgen, so kann der erste Gewindeabschnitt ein spezielles Dübelgewinde aufweisen, wie dies beispielsweise von sogenannten Sicherheitsschrauben bekannt ist, die üblicherweise für bauaufsichtlich zugelassene Langschaftdübel verwendet werden.

Aus der Offenlegungsschrift DE 3441561 A1 ist eine derartige Stockschraube bekannt. Diese Stockschraube weist einen vorderen Teil mit einem Gewindeabschnitt zum direkten Einschrauben in einen Verankerungsgrund, beispielsweise in Holz, oder zum indirekten Einschrauben in einen Verankerungsgrund, beispielsweise in einen in einem Verankerungsgrund aus Beton eingebrachten Spreizdübel, auf. Ein hinterer Teil weist dagegen ein metrisches Gewinde auf, an dem ein Anbauteil befestigt werden kann. Diese Stockschraube kann beispielsweise zur Befestigung von Fallrohren an Gebäuden verwendet werden. Hierfür wird die Stockschraube direkt in eine Gebäudewand oder in einen in der Gebäudewand angeordneten Dübel eingeschraubt und eine Rohrschelle, in die das Fallrohr eingelegt wird, mit einer an den Schellenkörper aufgeschweißten Mutter oder Innengewindehülse auf das Maschinengewinde aufgeschraubt.

Aus der Europäischen Patentschrift EP 2 306 032 B1 ist eine weitere Stockschraube bekannt, die am hinteren Ende des vorderen Teils einen Schraubenkopf aufweist. Diese Stockschraube wird verwendet, um ein Anbauteil an einer Dachkonstruktion zu befestigen, wobei der Schraubenkopf als Auflage für das Anbauteil dient.

Nachteilig an den bekannten Stockschrauben ist, dass ein Handwerker Stockschrauben unterschiedlicher Länge mit sich führen muss, um auf der Baustelle auf unterschiedliche Einbausituationen mit variierenden Abständen zwischen Verankerungsgrund und Anbauteil reagieren zu können.

Aufgabe der Erfindung ist es daher, eine Stockschraube vorzuschlagen, die auf einfache Art und Weise auf unterschiedliche Einbausituationen angepasst werden kann.

Diese Aufgabe wird erfindungsgemäß durch eine Stockschraube mit den Merkmalen des Anspruchs 1 gelöst. Die erfindungsgemäße Stockschraube erstreckt sich entlang einer Längsachse von einer Schraubenspitze an einem vorderen Ende zu einem hinteren Ende. "Schraubenspitze" meint hier den Teil der Stockschraube, der beim planmäßigen Einbringen der Stockschraube als erstes in den Verankerungsgrund eintritt. Die Schraubenspitze muss dabei nicht zwingend spitz zulaufen, wie dies von Holz- oder Spanplattenschrauben bekannt ist, sondern kann auch abgerundet oder abgeflacht sein, wie dies beispielsweise von Sicherheitsschrauben für Langschaftdübel oder von Betonschrauben bekannt ist. Die Stockschraube umfasst zwei Teile: Einen vorderen Teil mit einem ersten Gewindeabschnitt und einem Schraubenkopf und einen hinteren Teil mit einem zweiten Gewindeabschnitt.

Der erste Gewindeabschnitt ist zum direkten Einschrauben in einen Verankerungsgrund ausgebildet, insbesondere zum Einschrauben in Holz als Holz- beziehungsweise Spanplattengewinde, oder zum Einschrauben in ein Bohrloch in einem mineralischen Verankerungsgrund als Dübel- oder Betonschraubengewinde. Der Schraubenkopf weist einen größeren Durchmesser auf, als ein Kern des ersten Gewindeabschnitts. Insbesondere ist der Durchmesser des Schraubenkopfs größer als ein Außendurchmesser des ersten Gewindeabschnitts. Der Schraubenkopf weist insbesondere ein Angriffsmittel für ein Drehwerkzeug auf, also beispielsweise einen Innenmehrkant oder Kreuzschlitz, oder einen Außenmehrkant, an dem beispielsweise ein entsprechender Bit eines Akkuschraubers oder ein Schraubenschlüssel angesetzt werden kann. Beispielsweise weist der Schraubenkopf einen sich von vorne nach hinten erweiternden kegelstumpfförmigen Abschnitt auf, wie dies von Senkkopfschrauben bekannt ist. Auch andere Formen des Schraubenkopfs sind möglich.

Mit "Durchmesser" ist hier bei Außendurchmessern stets der Durchmesser eines die Kontur umschreibenden Kreises und bei Innendurchmessern stets der Durchmesser eines eingeschriebenen Kreises gemeint, sofern die jeweiligen Konturen nicht ohnehin kreisrund sind.

Der zweite Gewindeabschnitt des hinteren Teils der Stockschraube ist als Maschinengewinde, insbesondere als Außengewinde und insbesondere als metrisches Maschinengewinde ausgebildet, sodass eine Mutter, insbesondere eine Mutter nach DIN EN ISO 4032:2013-04 oder ein Bauteil mit entsprechendem Innengewinde aufgeschraubt werden kann.

Erfindungsgemäß sind der vordere Teil und der hintere Teil der Stockschraube zwei separate Einzelteile. Die erfindungsgemäße Stockschraube weist eine Adapterhülse auf, die den Schraubenkopf umgreift, diesen also zumindest teilweise umfasst, und die den vorderen Teil der Stockschraube mit dem hinteren Teil der Stockschraube verbindet. Insbesondere greift die Adapterhülse derart am Schraubenkopf an, dass die Verbindung zwischen der Adapterhülse und dem vorderen Teil ausschließlich über den Schraubenkopf erfolgt.

Zum Einbringen des Schraubenkopfs in die Adapterhülse und zum Durchführen der Schraubenspitze durch die Adapterhülse weist die Adapterhülse erfindungsgemäß eine Durchgangsöffnung auf, die einen vorderen und einen hinteren Abschnitt aufweist, die sich in ihren Durchmessern unterscheiden. Der vordere Abschnitt weist einen Durchmesser auf, der kleiner als der Durchmesser des Schraubenkopfs ist, während der hintere Abschnitt einen Durchmesser aufweist, der größer als der Durchmesser des Schraubenkopfs ist. Hierdurch wird in der Durchgangsöffnung ein Anschlag für den Schraubenkopf gebildet, wie er weiter unten beschrieben ist.

Durch die mehrteilige Ausbildung der Verbindung des hinteren Teils der Stockschraube mit dem vorderen Teil der Stockschraube mittels der Adapterhülse kann der hintere Teil, beispielsweise ein Gewindestift mit metrischem Maschinengewinde, mit praktisch jeder beliebigen handelsüblichen Holz-, Spanplatten-, Beton- oder Dübelschraube oder einer Schraube zum Einschrauben in Stahlblech kombiniert werden. Somit kann mit dem hinteren Teil und der Adapterhülse beispielsweise mit einer Holzbauschraube oder einer Sicherheitsschraube für einen Langschaftdübel eine für die jeweilige Anwendung angepasste Stockschraube hergestellt werden. Das Mitführen von Holz- und Betonschrauben, Langschaftdübeln und zusätzlichen Stockschrauben jeweils unterschiedlicher Länge ist nicht mehr notwendig. Es genügt, wenn der Anwender unterschiedlich lange Schrauben sowie die Adapterhülse und den hinteren Teil, beispielsweise einen Gewindestift oder ein Reduzierstück, mit sich führt. Die Anzahl der Befestigungsmittel, die der Anwender im Lager oder auf der Baustelle vorzuhalten hat, wird durch die Erfindung erheblich reduziert.

In einer bevorzugten Ausgestaltungsform weist die erfindungsgemäße Stockschraube einen ersten Anschlag für den Schraubenkopf auf, an dem sich der Schraubenkopf mit einer Vorderseite abstützt. Die Abstützung kann direkt oder indirekt über ein Trennelement, beispielsweise eine Dübelhülse erfolgen. Durch die Anlage des Schraubenkopfs am Anschlag ist gewährleistet, dass Zugkräfte, die auf den hinteren Teil der Stockschraube wirken, über die Adapterhülse auf den vorderen Teil der Stockschraube übertragen werden. Insbesondere weist der erste Anschlag die Form eines umlaufenden, über den gesamten Umfang des Schraubenkopfs anliegenden Ringbunds auf, sodass eine flächige Anlage zwischen Schraubenkopf und Adapterhülse möglich ist. Der Ringbund weist beispielsweise eine ebene Fläche oder eine konische Form auf, die mit einer ebenen beziehungsweise einer kegelstumpfförmigen Vorderseite des Schraubenkopfs korrespondiert, wodurch eine flächige Anlage und somit eine gute Kraftübertragung möglich ist. Alternativ ist auch nur eine punktuelle Auflage möglich.

Vorzugsweise ist der Anschlag kalottenförmig ausgebildet, derart, dass die Adapterhülse gegenüber dem vorderen Teil bezogen auf die Längsachse, die in diesem Fall durch den vorderen Teil definiert wird, in einfacher Weise um einen Winkel geneigt beziehungsweise geschwenkt werden kann.

Weiterhin ist bevorzugt, dass die Adapterhülse ein erstes Verbindungsgewinde zur Verbindung mit dem hinteren Teil aufweist. Der hintere Teil kann insbesondere ein Gewindestift oder eine Gewindestange mit gleichbleibendem Außendurchmesser oder ein Reduzierstück sein, also ein Bauteil mit zwei Gewinden, die unterschiedliche Durchmesser aufweisen. Das Reduzierstück kann beispielsweise zwei Außengewinde, zwei Innengewinde oder aber ein Außen- und ein Innengewinde mit unterschiedlichen Durchmessern aufweisen. Alternativ kann statt Gewinden ein Art Bajonettverschluss, eine Rastverbindung oder eine sonstige formschlüssige Verbindung vorgesehen werden.

Weiterhin ist bevorzugt, dass der hintere Teil und/oder die Adapterhülse ein Widerlagerelement aufweisen, das einen zweiten Anschlag bildet, an dem sich der Schraubenkopf mit einer Rückseite abstützt. Insbesondere liegt das Widerlagerelement am Schraubenkopf an. Es ist ein direkter Kontakt zwischen den Anschlägen und dem Schraubenkopf oder ein indirekter Kontakt über ein dazwischenliegendes Zwischenelement möglich. Das Widerlagerelement kann insbesondere durch eine Vorderseite des hinteren Teils und/oder der Adapterhülse gebildet werden. Durch die Abstützung des zweiten Anschlags am Schraubenkopf können Druckkräfte vom hinteren Teil auf den vorderen Teil übertragen werden.

Ein direkter oder indirekter Kontakt des ersten Anschlags und des zweiten Anschlags mit dem Schraubenkopf verhindert, dass der hintere Teil zum vorderen Teil axial beweglich ist. Zudem kann durch ein Verspannen der beiden Anschläge mit dem Schraubenkopf eine reibschlüssige Verbindung hergestellt werden, sodass der hintere Teil nicht relativ zum vorderen Teil um die Längsachse gedreht werden kann. Ist der hintere Teil beispielsweise ein Gewindestift, so kann dieser in die Adapterhülse eingeschraubt und gegen die Rückseite des Schraubenkopfs verspannt werden, sodass die Adapterhülse an der Vorderseite und das Widerlagerelement an der Rückseite des Schraubenkopfs anliegt und somit die Adapterhülse spielfrei und durch Reibschluss verdrehsicher mit dem Schraubenkopf verbunden ist.

Weiterhin ist bevorzugt, dass der hintere Teil und/oder die Adapterhülse zwei Gewinde mit unterschiedlichen Durchmessern umfasst. Der hintere Teil kann beispielsweise einstückig oder mehrteilig ausgebildet sein. Die Verwendung eines hinteren Teils mit zwei Gewinden hat den Vorteil, dass der zweite Gewindeabschnitt des hinteren Teils an das zu befestigende Anbauteil angepasst werden kann, ohne dass die Adapterhülse geändert werden muss. Weist die Adapterhülse beispielsweise ein Innengewinde zur Aufnahme des hinteren Teils auf, so kann durch die Verwendung unterschiedlicher hinterer Teile die Stockschraube an verschiedene Anbauteile angepasst werden. Weist die Adapterhülse beispielsweise ein Innengewinde der Größe M16 zur Aufnahme des hinteren Teils auf, so kann das hintere Teil ein einteiliges Gewindestück mit einem in die Adapterhülse einzudrehenden Außengewinde der Größe M16 und einem den zweiten Gewindeabschnitt der Stockschraube bildenden Außengewinde beispielsweise der Größe M8 sein, an dem das Anbauteil mit einer Mutter befestigt werden kann.

Bei einer bevorzugten Ausgestaltungsform der erfindungsgemäßen Stockschraube ist der hintere Teil korrosionsbeständiger ausgebildet als der vordere Teil. "Korrosionsbeständiger" meint hier, dass der Widerstand gegen Korrosion bei einer feuchten Atmosphäre größer ist. Beispielsweise ist einem Fachmann als "rostfreier Stahl" bekannter Stahl für diesen Anwendungsfall korrosionsbeständiger als feuerverzinkter Normalstahl, der wiederum bei identischen Umgebungsbedingungen korrosionsbeständiger als galvanisch verzinkter Normalstahl ist. Insbesondere besteht der vordere Teil aus einem galvanisch verzinkten Normalstoffstahl, wie dies bei Holzbauschrauben für den Innenbereich üblich ist, während der hintere Teil aus einem Edelstahl hergestellt ist. Somit lässt sich die erfindungsgemäße Stockschraube auf einfache Weise an die jeweilige Einbausituation beziehungsweise die Umgebungsbedingungen anpassen. Kann beispielsweise bei einer Fassadenanwendung, also dann, wenn die Stockschraube im Außenbereich an Gebäuden eingesetzt wird, gewährleistet werden, dass der vordere Teil nicht, sondern nur der hintere Teil in einer feuchten Umgebung angeordnet wird, kann für den vorderen Teil eine gewöhnliche galvanisch verzinkte Schraube verwendet werden, während der hintere Teil aus korrosionsbeständigem Stahl besteht. Abhängig von dem Umgebungsbedingungen kann die Adapterhülse aus korrosionsbeständigem Stahl oder galvanisch verzinktem Stahl hergestellt werden.

Zur Vermeidung von Kontaktkorrosion ist vorzugsweise zwischen dem vorderen Teil und der Adapterhülse und/oder dem hinteren Teil ein Trennelement angeordnet. Das Trennelement kann insbesondere aus Kunststoff bestehen. Vorzugsweise ist zwischen der Adapterhülse und dem Schraubenkopf ein Teil einer Dübelhülse eines Spreizdübels angeordnet. Zudem oder alternativ kann zwischen dem Schraubenkopf und dem hinteren Teil ein weiteres Trennelement angeordnet werden, beispielsweise in Form einer Kunststoffscheibe, die zudem die Funktion erfüllen kann, den Schraubenkopf in der Adapterhülse gegen ein Herausbewegen zu sichern.

Zur Befestigung eines Anbauteils an dem zweiten Gewindeabschnitt kann die erfindungsgemäße Stockschraube am zweiten Gewindeabschnitt eine Adapterplatte aufweisen, die eine flächige Anlage des Anbauteils an der Stockschraube gewährleistet.

Vorzugsweise bildet die erfindungsgemäße Stockschraube mit einem zugeordneten Spreizdübel aus Kunststoff ein Befestigungssystem. Der Spreizdübel ist insbesondere ein Langschaftdübel zur Verwendung im Außenbereich an Fassaden. Der Spreizdübel ist durch Einschrauben des ersten Gewindeabschnitts, der insbesondere ein Dübelgewinde aufweist, aufspreizbar.

Die vorstehend in der Beschreibung genannten Merkmale und Merkmalskombinationen, Ausführungen und Ausgestaltungen der Erfindung, sowie die nachfolgend in der Figurenbeschreibung genannten und/oder in einer Figur gezeichneten Merkmale und Merkmalskombinationen sind nicht nur in der jeweils angegebenen oder gezeichneten Kombination, sondern auch in grundsätzlich beliebigen anderen Kombinationen oder aber einzeln verwendbar. Es sind Ausführungen der Erfindung möglich, die nicht alle Merkmale eines abhängigen Anspruchs aufweisen. Auch können einzelne Merkmale eines Anspruchs durch andere offenbarte Merkmale oder Merkmalskombinationen ersetzt werden. Ausführungen der Erfindung, die nicht alle Merkmale des Ausführungsbeispiels, sondern einen grundsätzlich beliebigen Teil der gekennzeichneten Merkmale des Ausführungsbeispiels aufweisen, sind möglich.

Die Erfindung wird nachfolgend anhand mehrerer in der Zeichnung dargestellten Ausführungsbeispiele näher erläutert.

Es zeigen:
- Figur 1: eine erfindungsgemäße Stockschraube in einem Verankerungsgrund in einer teilweise geschnittenen Seitenansicht;
- Figur 2: die erfindungsgemäße Stockschraube in einem teilweise zusammengebauten Zustand in einem Schnitt;
- Figur 3: eine perspektivische Darstellung der Adapterhülse und des hinteren Teils;
- Figur 4: eine alternative Adapterhülse mit einem eingeführten Schraubenkopf; und
- Figur 5: ein erfindungsgemäßes Befestigungssystem in einer teilweise geschnittenen Seitenansicht.

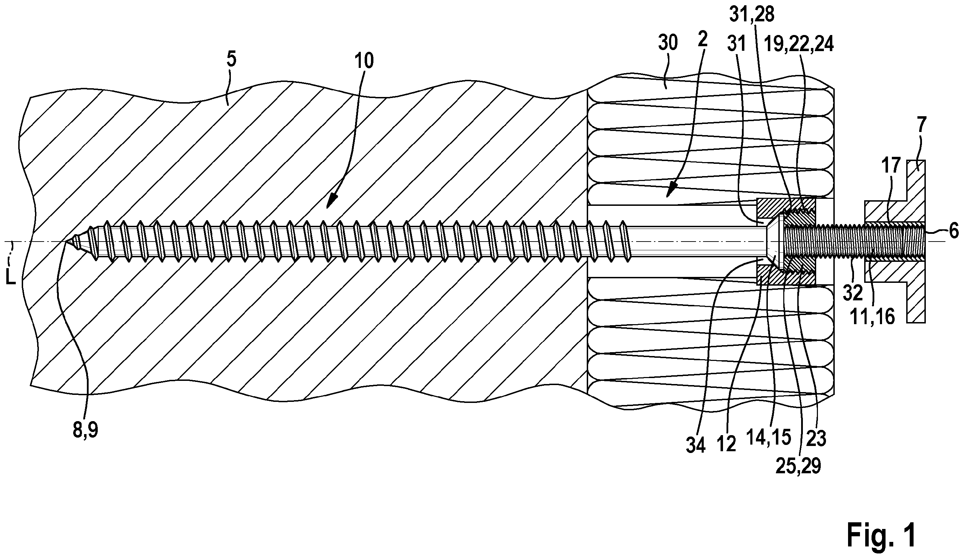

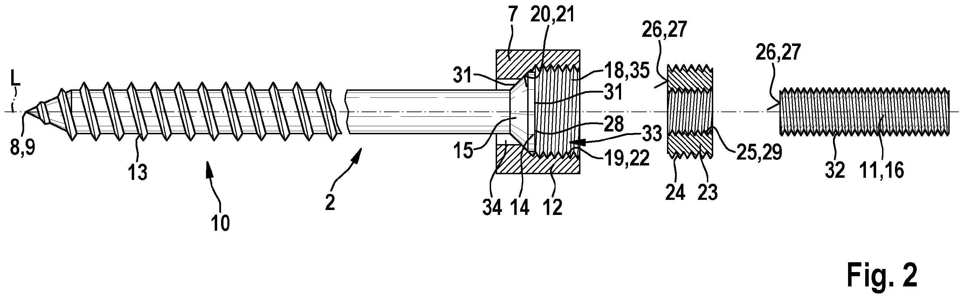

In Figur 1 ist eine erfindungsgemäße Stockschraube 2 dargestellt, die in einem Verankerungsgrund 5, hier in einem Holzbalken, verankert ist. Hierzu wurde die Stockschraube 2 direkt in den Verankerungsgrund 5 eingeschraubt. Die erfindungsgemäße Stockschraube 2 erstreckt sich entlang einer Längsachse L von einer konisch zulaufenden Schraubenspitze 8, die das vordere Ende 9 der Stockschraube 2 bildet, bis zu einem hinteren Ende 6. Wie in Figur 2 zu sehen ist, ist die Stockschraube 2 mehrteilig ausgebildet und umfasst einen vorderen Teil 10 und einen hinteren Teil 11 als separate Einzelteile, die mittels einer Adapterhülse 12 miteinander axial- und hier durch Reibschluss auch drehfest miteinander verbunden sind.

Der vordere Teil 10 der Stockschraube 2 ist eine Holzschraube, die einen ersten Gewindeabschnitt 13 und einen Schraubenkopf 14 umfasst. Die Holzschraube ist aus einem Kohlenstoffstahl hergestellt und zum Schutz vor Korrosion galvanisch verzinkt. Der Schraubenkopf 14 ist als Senkkopf mit einer konischen Vorderseite 15 ausgestaltet. Der Schraubenkopf 14 weist einen größeren Außendurchmesser als der erste Gewindeabschnitt 13 auf.

Der hintere Teil 11 der Stockschraube 2 ist eine zylindrische Gewindestange 16, die einen zweiten Gewindeabschnitt 32 aufweist und aus Edelstahl hergestellt ist. Auf die Gewindestange 16 ist eine Adapterplatte 7 aus einer Aluminiumlegierung mittels einer an der Adapterplatte 7 befestigten Gewindehülse 17 aufgeschraubt, die das hintere Ende 6 der Stockschraube 2 bildet. In Figur 1 ist die Adapterplatte 7 außerhalb einer auf den Verankerungsgrund 5 aufgebrachten Wärmedämmung 30 angeordnet. Alternativ könnte die Adapterplatte 7 auf bündig mit der Wärmedämmung 30 sein.

Die Adapterhülse 12 ist eine zylindrische Hülse mit einer durchgehenden Stufenbohrung 18, die eine Durchgangsöffnung 33 bildet, die hinten einen hinteren Abschnitt 35 mit einem Durchmesser aufweist, der größer als der Durchmesser des Schraubenkopfs 14 ist und in dem ein erstes metrisches Innengewinde 19 der Größe M16 als erstes Verbindungsgewinde 22 angeordnet ist. Zwischen dem Abschnitt mit dem größeren Durchmesser und einem vorderen Abschnitt 35 mit kleinerem Durchmesser weist die Stufenbohrung 18 einen konischen Übergangsabschnitt 20 auf, der einen ersten Anschlag 21 für die Vorderseite 15 des Schraubenkopfs 14 bildet, an dem der Schraubenkopf 14 flächig anliegt und sich abstützt. Die Adapterhülse 12 umgreift den Schraubenkopf 14 in Umfangsrichtung vollständig.

Im zusammengebauten Zustand der Figur 1 ist in das erste Verbindungsgewinde 22 ein Reduzierstück 23 der Adapterhülse 12 eingeschraubt, das ein Außengewinde 24 der Größe M16 und ein Innengewinde der Größe M10 als zweites Verbindungsgewinde 29 aufweist, in das die Gewindestange 16 eingeschraubt ist. Um ein Einschrauben zu erleichtern, kann die Adapterhülse 12 an ihrer Außenseite Schlüsselflächen aufweisen, so dass beim Eindrehen des Reduzierstücks 23 mit einem Werkzeug ein Mitdrehen der Adapterhülse 12 verhindert werden kann. Am Reduzierstück 23 und an der Gewindestange 16 kann eine chemische Schraubensicherung vorgesehen sein, um ein Lösen der Teile von der Adapterhülse 12 dauerhaft zu verhindern.

Die Vorderseiten des Reduzierstücks 23 und der Gewindestange 16 bilden jeweils ein Widerlagerelement 26 und liegen als zweiter Anschlag 27 an einer Rückseite 28 des Schraubenkopfs 14 an, so dass sich der Schraubenkopf 14 am zweiten Anschlag 27 abstützt. Der Schraubenkopf 14 ist zwischen der Adapterhülse 12 und dem hinteren Teil 11 der Stockschraube 2 formschlüssig axialfest und reibschlüssig drehfest eingespannt, so dass Kräfte zwischen dem hinteren Teil 11 und dem vorderen Teil 10 über die Adapterhülse 12 übertragen werden können.

Sowohl die Adapterhülse 12 als auch das Reduzierstück 23 sind aus Edelstahl hergestellt und somit wie der hintere Teil 11 korrosionsbeständiger ausgebildet als der vordere Teil 10 der Stockschraube 2. Wird die Stockschraube 2 im Außenbereich eines Gebäudes verwendet, wie dies in Figur 1 für eine Anwendung zur Befestigung einer Fassadenbekleidung (nicht dargestellt) am Verankerungsgrund 5 dargestellt ist, wobei die Fassadenbekleidung an der Adapterplatte 7 befestigbar ist, kann der vordere Teil 10 der Stockschraube 2 vor Witterungseinflüssen geschützt im Bereich, beziehungsweise hinter, der Wärmedämmung 30 angeordnet werden, während der hintere Teil 11 der Witterung ausgesetzt und daher aus Edelstahl hergestellt ist. Um Kontaktkorrosion zu vermeiden, ist zwischen dem vorderen Teil 10 und der Adapterhülse 12 und dem hinteren Teil 11 ein Trennelement 31 in Form einer dünnen Kunststoffhülle angeordnet, die den Schraubenkopf 14 umgibt.

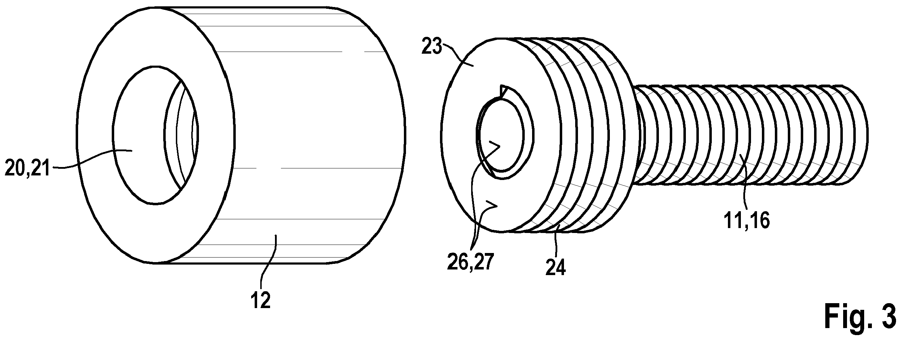

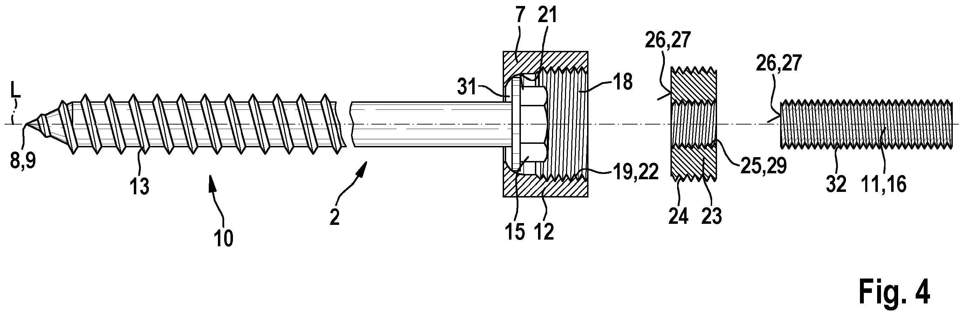

Abweichend von der in den Figuren 1 bis 3 dargestellten Ausführungsform der erfindungsgemäßen Stockschraube 1 ist in der Ausführungsform der Figur 4 der Schraubenkopf 14 als Sechskant mit angeprägter Unterlegscheibe ausgebildet, die in diesem Fall die Vorderseite 15 des Schraubenkopfs 14 bildet. Der durch die Stufenbohrung 18 der Durchgangsöffnung 33 ausgebildete erste Anschlag 21 ist hier kalottenförmig ausgebildet, so dass die Vorderseite 15 des Schraubenkopfs 14 nur an ihren Rändern und somit linienförmig am Anschlag 21 anliegt, wodurch eine Schrägstellung der Adapterhülse 21 gegenüber der Längsachse L möglich ist.

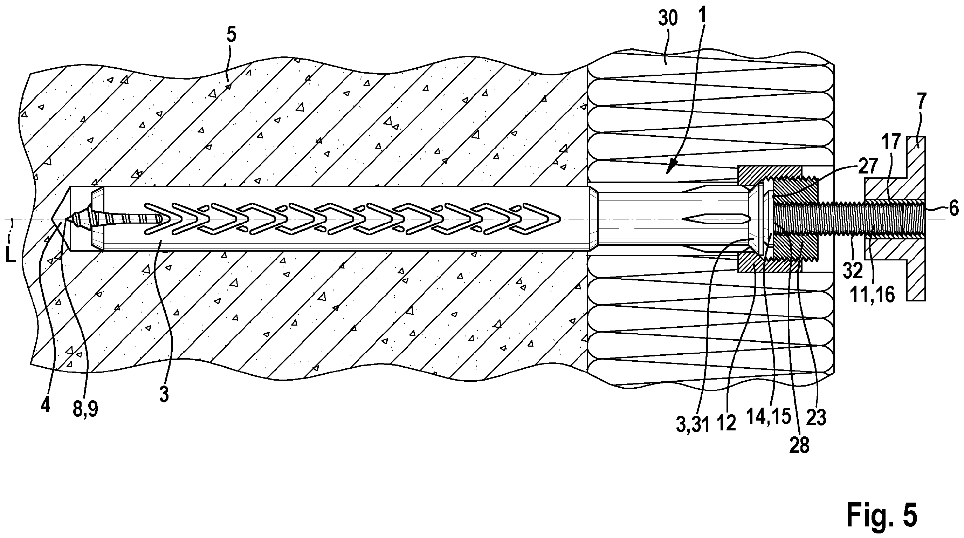

In Figur 5 ist ein erfindungsgemäßes Befestigungssystem dargestellt, das eine erfindungsgemäße Stockschraube 2 mit einem Spreizdübel 1 kombiniert. Der Spreizdübel 1 ist in ein Bohrloch 4 eingebracht und durch Eindrehen einer Dübelschraube als vorderer Teil 10 der Stockschraube 2 aufgespreizt. Ein Teil, nämlich das hintere Ende, der Dübelhülse 3 des Spreizdübels 1 ist in der Adapterhülse 12 aufgenommen und als Trennelement 31 zwischen der Adapterhülse 12 und der Vorderseite 15 des Schraubenkopfs 14 angeordnet.

### Bezugszeichenliste

### Stockschraube sowie Befestigungssystem mit dieser Stockschraube

- 1: Spreizdübel
- 2: Stockschraube
- 3: Dübelhülse
- 4: Bohrloch
- 5: Verankerungsgrund
- 6: hinteres Ende der Stockschraube 2
- 7: Adapterplatte
- 8: Schraubenspitze
- 9: vorderes Ende der Stockschraube 2
- 10: vorderer Teil der Stockschraube 2
- 11: hinterer Teil der Stockschraube 2
- 12: Adapterhülse
- 13: erster Gewindeabschnitt
- 14: Schraubenkopf
- 15: Vorderseite des Schraubenkopfs 14
- 16: Gewindestange
- 17: Gewindehülse der Adapterplatte 7
- 18: Stufenbohrung
- 19: erstes Innengewinde
- 20: Übergangsabschnitt der Stufenbohrung 18
- 21: erster Anschlag
- 22: erstes Verbindungsgewinde
- 23: Reduzierstück
- 24: Außengewinde des Reduzierstücks 23
- 25: Innengewinde des Reduzierstücks 23
- 26: Widerlagerelement
- 27: zweiter Anschlag
- 28: Rückseite des Schraubenkopfs 14
- 29: zweites Verbindungsgewinde
- 30: Wärmedämmung
- 31: Trennelement
- 32: zweiter Gewindeabschnitt
- 33: Durchgangsöffnung
- 34: vorderer Abschnitt der Durchgangsöffnung 33
- 35: hinterer Abschnitt der Durchgangsöffnung 33
- L: Längsachse

## Patentansprüche

1. Stockschraube,
die sich entlang einer Längsachse (L) von einer Schraubenspitze (8) an einem vorderen Ende (9) zu einem hinteren Ende (6) erstreckt,
wobei ein vorderer Teil (10) der Stockschraube (2) einen ersten Gewindeabschnitt (13) und einen Schraubenkopf (14) umfasst, wobei der Schraubenkopf (14) einen größeren Durchmesser aufweist als ein Kern des ersten Gewindeabschnitts (13), und
wobei ein hinterer Teil (11) der Stockschraube (2) einen zweiten Gewindeabschnitt (32) aufweist,
**dadurch gekennzeichnet,**
**dass** der vordere Teil (10) und der hintere Teil (11) zwei separate Einzelteile sind und dass die Stockschraube (2) eine Adapterhülse (12) aufweist, die eine Durchgangsöffnung (33) zum Durchführen der Schraubenspitze (8) durch die Adapterhülse (12) aufweist, mit einem vorderen Abschnitt (34), der einen Durchmesser aufweist, der kleiner als der Durchmesser des Schraubenkopfs (14) ist, und mit einem hinteren Abschnitt (35), der einen Durchmesser aufweist, der größer als der Durchmesser des Schraubenkopfs (14) ist, derart, dass die Adapterhülse (12) den Schraubenkopf (14) umgreift und den vorderen Teil (10) mit dem hinteren Teil (11) verbindet.

2. Stockschraube gemäß Anspruch 1,
**dadurch gekennzeichnet,**
**dass** die Adapterhülse (12) einen ersten Anschlag (21) für den Schraubenkopf (14) aufweist, an dem sich der Schraubenkopf (14) mit einer Vorderseite (15) abstützt.

3. Stockschraube gemäß Anspruch 2,
**dadurch gekennzeichnet,**
**dass** der Anschlag (21) kalottenförmig ausgebildet ist.

4. Stockschraube gemäß einem der vorstehenden Ansprüche,
**dadurch gekennzeichnet,**
**dass** die Adapterhülse (12) ein erstes Verbindungsgewinde (22) zur Verbindung mit dem hinteren Teil (11) aufweist.

5. Stockschraube gemäß einem der vorstehenden Ansprüche,
**dadurch gekennzeichnet,**
**dass** der hintere Teil (11) und/oder die Adapterhülse (12) ein Widerlagerelement (26) aufweisen, das einen zweiten Anschlag (27) bildet, an dem sich der Schraubenkopf (14) mit einer Rückseite (28) abstützt.

6. Stockschraube gemäß einem der vorstehenden Ansprüche,
**dadurch gekennzeichnet,**
**dass** der hintere Teil (11) und/oder die Adapterhülse (14) zwei Gewinde (22, 29, 32) mit unterschiedlichen Durchmessern umfasst.

7. Stockschraube gemäß einem der vorstehenden Ansprüche,
**dadurch gekennzeichnet,**
**dass** der hintere Teil (11) korrosionsbeständiger ausgebildet ist als der vordere Teil (10).

8. Stockschraube gemäß einem der vorstehenden Ansprüche,
**dadurch gekennzeichnet,**
**dass** zwischen dem vorderen Teil (10) und der Adapterhülse (12) und/oder dem hinteren Teil (11) ein Trennelement (31) zum Schutz vor Kontaktkorrosion angeordnet ist.

9. Stockschraube gemäß einem der vorstehenden Ansprüche,
**dadurch gekennzeichnet,**
**dass** zwischen der Adapterhülse (12) und dem Schraubenkopf (14) ein Teil einer Dübelhülse (3) eines Spreizdübels (1) angeordnet ist.

10. Befestigungssystem mit einer Stockschraube (2) nach einem der vorstehenden Ansprüche und mit einem Spreizdübel (1), der durch ein Einschrauben des vorderen Teils (10) der Stockschraube (2) aufspreizbar ist.

11. Befestigungssystem nach Anspruch 10, **dadurch gekennzeichnet, dass** eine Dübelhülse (3) des Spreizdübels (1) zwischen der Adapterhülse (12) und dem vorderen Teil (10) angeordnet ist.
